(19) Europäisches Patentamt
European Patent Office
Office européen des brevets

(11) **EP 2 658 255 A1**

(12) **EUROPEAN PATENT APPLICATION**

(43) Date of publication:
**30.10.2013  Bulletin 2013/44**

(51) Int Cl.:
*H04N 7/26* (2006.01)    *H04N 7/50* (2006.01)
*G06T 7/20* (2006.01)

(21) Application number: **12166009.6**

(22) Date of filing: **27.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft**
**80333 München (DE)**

(72) Inventors:
• **Amon, Peter**
  **81675 München (DE)**
• **Laumer, Marcus**
  **91085 Weisendorf (DE)**

(54) **Methods and devices for object detection in coded video data**

(57)    The invention relates to methods and devices
for object detection in coded video data.

Coded video data is parsed to identify block coding
types and/or coding indicators that relate to predictable
image activity of the block that are assigned to certain
indicators. After evaluation of a respective indicator for
one or more blocks of an image of the coded vide data
a decision is made whether to assign this indicator to a
object map or not.

This invention can be used for video surveillance,
industrial or medical imaging applications.

FIG 1

EP 2 658 255 A1

**Description**

The invention relates to methods and devices for object detection in coded video data.

Moving object detection is probably one of the most widely used video analysis procedure in many different applications. Video surveillance systems need to detect moving persons or vehicles, trackers have to be initialized with the objects they should track, and recognition algorithms require the regions within the scene where they should identify objects. For this reason, several proposals are available for efficient object detection. Most of them operate in the pixel domain, i.e., on the actual pixel data of each frame. This usually leads to a very high accuracy, but at the expense of computational complexity.

As most video data is stored or transferred in compressed representation, the bit stream has to be completely decoded beforehand in such scenarios. Therefore, attempts have been made to eliminate the costly step of decoding and to perform the analysis directly in the compressed domain.

Detection algorithms can therefore be divided into two categories:

A) pixel domain detection

Thereby, pixel domain is well-defined as the entire video content is decoded and all video frames are available in pixel representation.

B) compressed domain detection:

Compressed domain on the other hand does not clearly express which part of the video content has to be decoded and which part may remain compressed. Several compressed domain detection methods achieve reasonable results by analyzing entropy decoded syntax elements.

Laumer et al. [1] designed a change detection algorithm for RTP streams (RTP - Real Time Protocol, see IETF - Internet Engineering Task Force) that does not require video decoding at all. Change detection can be seen as a preliminary stage of moving object detection, since each moving object causes a global change within the scene. The algorithm evaluates RTP packet sizes and number of packets per frame. Since no decoding of video data is performed the method is codec-independent and efficient.

Established moving object detection methods in hybrid video codecs are based on solely extracting and analyzing motion vectors [2, 3]. For instance, Szczerba et al. [2] showed an algorithm to detect objects in video surveillance applications using H.264/AVC video streams (AVC - Advance Video Coding standard). Their algorithm assigns a motion vector to each 4x4 pixel block of the examined frame. This dense motion vector field is further analyzed to estimate vectors that represent real motion by calculating spatial and temporal confidences as introduced by Wang et al. [4].

Other object detection methods do not solely analyze motion vectors but also exploit additional compressed information, like macroblock partition modes [5, 6] or transform coefficients [7, 8].

Fei and Zhu [5], for instance, presented a study on mean shift clustering based moving object segmentation for H.264/AVC video streams. In a first step, their method refines the extracted raw motion vector field by normalization, median filtering, and global motion compensation, whereby already at this stage the algorithm uses macroblock partition modes to enhance the filtering process. The resulting dense motion vector field and the macroblock modes then serve as input for a mean shift clustering based object segmentation process, adopted from pixel domain approaches, e.g., introduced by Comaniciu and Meer [9].

Mak and Cham [7] on the other hand analyze motion vectors in combination with transform coefficients to segment H.264/AVC video streams to fore- and background. Quite similar to the techniques described before their algorithm initially extracts and refines the motion vector field by normalization, filtering, and background motion estimation. After that the foreground field is modeled as a Markov random field. Thereby, the transform coefficients are used as an indicator for the texture of the video content. The resulting field indicates fore- and background regions, which are further refined by assigning labels for distinguished objects.

Extracting motion vectors and transform coefficients from a compressed video stream requires more decoding steps than just extracting macroblock type information. Verstockt et al. [10] proposed an algorithm for detecting moving objects by just extracting macroblock partition information from H.264/AVC video streams. First, they perform a foreground segmentation by assigning macroblocks to foreground and background, which results in a binary mask for the examined frame. Thereby, macroblocks in 16x16 partition mode (i.e., no sub-partitioning of the macroblock, including the skip mode) are regarded as background and all other macroblocks are labeled foreground. To further enhance the generated mask, their algorithm then performs temporal differencing of several masks and median filtering of the results. In a final step, objects are extracted by blob merging and convex hull fitting techniques. Verstockt et al. designed their algorithm for multi-view object localization. Hence, the extracted objects of a single view then serve as input for the multi-view object detection step.

It is an object of the invention to present methods and devices for object detection in coded video data that delivers the objects in a high quality. It is a further object of the invention to present methods and devices that can be realized and executed in a low complex way.

These objects are solved by independent claims. Enhancements and alternative solutions are presented by dependent claims.

The invention relates to a method for object detection in an image of a coded video data, comprising:

- Providing at least three indicators, each indicator represents a different image activity from low to high image activity for a respective block in the image;
- Assigning a coding mode of the block based on a block coding type to one of the at least three indicators or assigning at least one coding indicator of the block based on transform coefficients of the block to one of the at least three indicators, the assignment is performed such that the coding mode and/or the coding identifier that are likely to show a specific image activity are grouped to the respective indicator that represents the specific image activity;
- Forming an indicator map by assigning one of the at least three indicators to blocks of the image depending on the coding mode or on the at least one coding indicator of the respective block;
- Forming an object value for the respective block by analyzing the indicator map in an area of the respective block, the object value showing a relevance of the respective block to be part of an object in the image;
- Assigning the respective block to an object map, if the object value shows a certain characteristic, the object map showing blocks that relate to the object in the image.

This method shows the advantages of a simple but robust algorithm for detecting an object in the image. It is simple, because it does not require much calculation power to parse the coded video data, because a full decoding to pixel level is omitted. In addition the assignment of coding modes and coding identifiers is easy to perform. Further more the entire processing to receive the object map requires low calculation complexity. The invention and its enhancements were tested for a single video stream in GIF (CIF - Common Intermediate Format) resolution on a Intel 15-2520M CPU @ 2.5GHz with 4GB RAM. It could be shown that 400-500 frames / images could be processed per second.

In an extension of the invention the step of assigning a coding mode further comprises an assignment of intra-coded block types as coding modes to the indicator that relates to high image activity. The inventors found that intra-coded blocks, such as intra-coed macroblocks of a standard H.264/AVC, shows most likely high image activity in a respective block. This is evaluation relates to predictive coded blocks or slices, covering the block, such as P-frames or P-slices. Image activity is a general wording for visual changes within the block. This can mean that an object or a part of an object shows high motion from one frame to another frame in the respective block. By this enhancement the quality of the correct object detection can be improved.

The invention can be further enhanced in the step of assigning a coding mode further by assigning the block type such that the more pixels are represented by a block the indicator representing less image activity is assigned. The inventors found a link between image activity and number of pixels per block. By using this enhancement the quality of correct object detection can be improved.

In another extension the step of assigning a coding mode further comprises a step of assigning to a block type that shows no additional data for a block to be coded the indicator representing low image activity. The inventors found that if no data is transmitted for a given block, whereby the reconstruction relies on image data of a previous or later frame the chance to have image activity in this block is low. By using this enhancement the quality of correct object detection can be improved.

In another advantageous extension the step of forming an indicator map further is further extended such that the assignment of the indicators for the coding modes to blocks is performed on a part of an inter-coded image or inter-coded slice only. The inventors discovered that their invention performs best for inter coded images or slice, because intra-coded images or slices can be generated for image content with low or high image activity. By using this enhancement the quality of correct object detection can be highly improved.

An extension to the invention relates to the step of assigning at least one coding indicator with following additional steps:

- Segmenting result value of a respective coding indicator to value ranges and assigning the value ranges according to their respective expected image activity to a respective indicator that represents an equivalent image activity, whereby the result value is formed on the basis of one of the following procedures:

  - Assigning a number of bits, used to code the transform coefficients of the block after quantization and entropy coding as the result value;
  - Assigning a number of transform coefficients of a block that is unequal zero as the result value;
  - Assigning a sum of absolute amplitudes of transform coefficients unequal to zero as the result value;
  - Assigning an energy value representing the energy of the transform coefficients of the block as the result value;

- Assigning an energy value representing the energy of the transform coefficient levels of the block as the result value.

These procedures are all characterized by a low computational power for executing. In addition it could be shown by the inventors that these coding indicators result is a reliable detection of the object in the image.

It is advantageous to extend the step of assigning at least one coding indicator further such that a first indicator with a second indicator to form the indicator is assigned, whereby the first and second indicators are based on either the coding mode and one of the coding indicators or two different coding indicators. By using this extension the quality of the detection of the object can be further enhanced, e.g. at a border of the object.

In particular this previous extension can be executed such as follows:

- Normalising values representing the first and second indicators;
- Forming the indicator by multiplying the normalized values or by weighted sum of the first and second indicators.

This allows a low complex combination of either at least two different coding indicators or the coding mode with at least one coding indicator.

The invention can further improved in the step of forming an object value further by analyzing the area such that this includes the indicator of the respective block and the indicators in a neighborhood of the respective block. This enhancement allows on the one hand eliminating blocks that are not part of the object. On the other hand the correct assignment of blocks to the object map is improved if blocks surrounding a respective block are also very likely to be part of the object.

A device for object detection in an image of a coded video data is also part of the invention that includes:

- a first unit for providing at least three indicators, each indicator represents a different image activity from low to high image activity for a respective block in the image;
- a second unit for assigning a coding mode of the block based on a block coding type to one of the at least three indicators or assigning at least one coding indicator of the block based on transform coefficients of the block to one of the at least three indicators, the assignment is performed such that the coding mode and/or the coding identifier that are likely to show a specific image activity are grouped to the respective indicator that represents the specific image activity;
- a third unit for forming an indicator map by assigning one of the at least three indicators to blocks of the image depending on the coding mode or on the at least one coding indicator of the respective block;
- a fourth unit for forming an object value for the respective block by analyzing the indicator map in an area of the respective block, the object value showing a relevance of the respective block to be part of an object in the image;
- a fifth unit for assigning the respective block to an object map, if the object value shows a certain characteristic, the object map showing blocks that relate to the object in the image.

The device shows the same advantages as the corresponding method.

The device can be extended by a sixth unit for performing at least one of the steps disclosed by the extension of the method. This will results in equivalent advantageous as the method itself.

The invention will be explained by using the following figures:

Figure 1         Method in form of a flow chart and device realizing an example of the invention;

Figure 2         Sample hierarchical structure of block-based video coding;

Figure 3a - 3f         Images and maps showing results of different steps of the example.

Figure 4         Intermediate result of executing invention;

All elements with identical functions are labeled by the same reference sign.

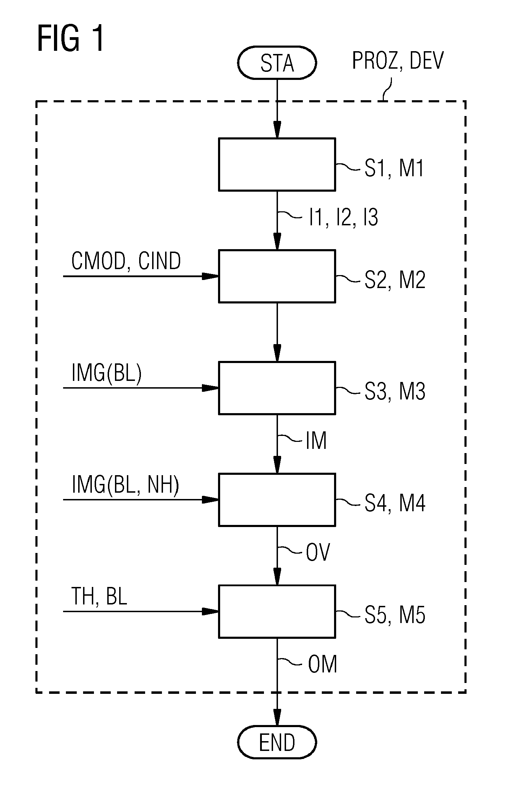

The first example, see FIG. 1, is based on video data coded by a standard called H.264/AVC (AVC - Advanced Video Coding) that was jointly developed by ITU-T VCEG (ITU - International Telecommunications Union, VCEG - Video Coding Experts Group) and ISO/IEC MPEG (ISO - International Organization for Standardization, IEC - International Electrotechnical Commission, MPEG - Moving Picture Experts Group). This coding standard belongs to the class of block-based hybrid video coders. The example starts in step STA.

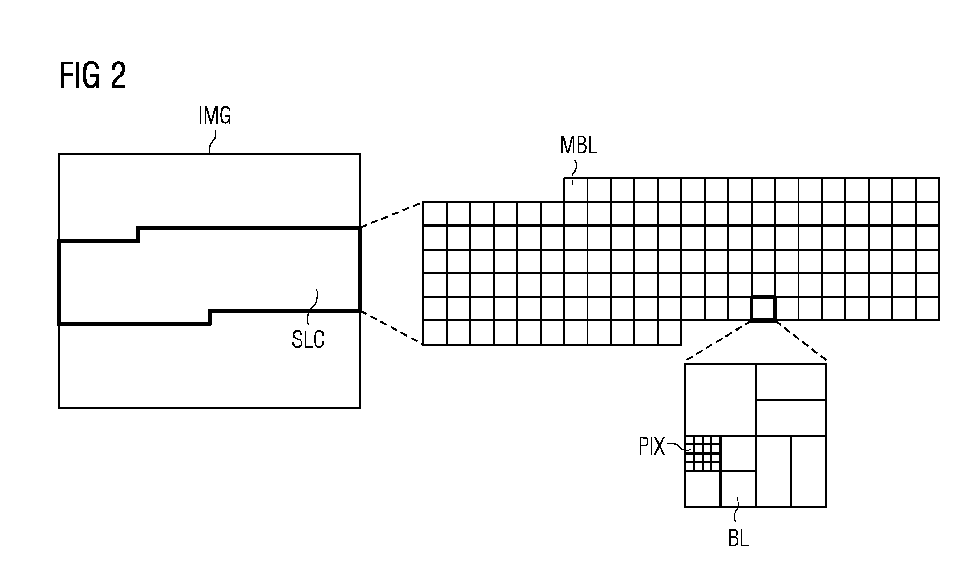

As can be seen in FIG. 2, each frame or image IMG of a video sequence is divided in several so-called slices SLC and each slice is further divided in so-called macroblocks MBL, which have a size of 16 by 16 pixels PIX. The term image and frame have an identical meaning in this description. Next the encoder decides, according to a rate-distortion-optimization (RDO), how each macroblock will be encoded. In this description the invention is shown for macroblocks that are specific forms of blocks. However the invention can be used for blocks as well as macroblocks. Thereby, several different macroblock types of three classes are available. The first class is used if the macroblock should be intra-frame predicted from its previously encoded neighbors. The second and third classes are used in an inter-frame prediction mode, which allows exploiting similarities between frames. It is defined that macroblocks of the second class are predicted by just using one predictor, whereas macroblocks of the third class are predicted by using two different predictors. They are called I, P, and B macroblocks, respectively. The term "I" relates to intra, "P" to inter and "B" to bi-directional inter coded e.g. frames, images or slices.

The same classification is defined for slices. In the scope of this description the H.264/AVC Baseline profile is assumed. However the invention is not restricted to this image coder H.264/AVC. Within this profile, only I and P slices are allowed. The 32 macroblock types available for these two slice classes are grouped to six coding modes (CMOD):

MB_I_4x4:

Intra-frame predicted macroblocks that are further divided into smaller blocks of size 4 by 4 pixels. In H.264/AVC, see first type in table 7-11
(mb_type = 0, transform_size_8x8_flag = 0).

MB_I_16x16:

Intra-frame predicted macroblocks that are not further divided and not of size 4x4. In H.264/AVC, see all types in table 7-11 except the type for first entry labeled mb_type = 0 and, transform_size_8x8_flag = 0.

MB_P_8x8:

Inter-frame predicted macroblocks that are further divided into smaller blocks of size 8 by 8 pixels. In H.264/AVC, see types in table 7-13 with mb_type = 3 and mb_type = 4.

MB_P_RECT:

Inter-frame predicted macroblocks that are further divided into smaller blocks of rectangular (not square) shape (16x8 or 8x16). In H.264/AVC, see types in table 7-13 with mb_type = 1 and mb_type = 2.

MB_P_16x16:

Inter-frame predicted macroblocks that are not further divided. In H.264/AVC, see in table 7-13 type with mb_type = 0.

MB_P_SKIP:

No additional data is transmitted for these macroblocks. Instead, the motion vector predictor that points to the first reference frame is used directly. In H.264/AVC, see type in table 7-13 with mb_type = inferred named P_Skip.

Within an I slice, the decision of the RDO which macroblock type will be used for encoding the block heavily depends on the actual pixel data of this block and its difference to previous frames. Therefore, evaluating macroblock types can give a good guess of the location of moving objects within the scene. In order to determine which macroblock types indicate moving objects, an initial macroblock type weight (MTW), also known as indicator I1, I2, I3, has to be defined for each coding mode first, which are shown in the following table:

| Slice Type | Coding Mode CMOD | Assumption | Indicator |
| --- | --- | --- | --- |
| P | MB_I_4x4 | most likely motion | I4=3 |
| P | MB_I_16x16 | most likely motion | I4=3 |
| P | MB_P_8x8 | likely motion | I3=2 |
| P | MB_P_RECT | likely motion | I3=2 |
| P | MB_P_16x16 | maybe motion | I2=1 |
| P | MB_P_SKIP | most likely no motion | I1=0 |

In this example four indicators I1, ..., I4 are provided in a first step S1 that are marked by a specific value. The image activity per block is represented by motion activity, e.g. low image activity is "most likely no motion" and high image activity is represented by "most likely motion". The higher the specific value the more image activity is expected for the respective indicator. In a second step S2 the assignment as shown in the previous table is performed.

Coding modes MB_I_4x4 and MB_I_16x16 are not presented by any indicator, because these specific macroblock types represent different image activities and hence can not be assigned to one of the specific indicators. To solve this problem different solutions are imaginable. One approach is to inter- or extrapolate from neighboring slices if the current frame consists of several slices. If the encoder configuration just allows one slice per frame, a resulted fore- and background segmentation mask of the previous frame, whereby the foreground segmentation mask represents an object map OM, could be also used for the subsequent I frame. For further enhancing this result, the mask could be interpolated by also considering the mask of the subsequent P frame, if the system configuration admits.

Intra- predicted macroblocks are also available in P slices. Within a P slice it is assumed that the two coding modes MB_ I_ 4x4 and MB_ I_ 16x16 indicate blocks with high motion, because usually the encoder decides to choose an I macroblock type if similar video content could not be found in previous frames. Therefore, it is most likely that an object has moved or just entered the scene within this region.

Macroblock types of the two coding modes MB_P_8x8 and MB_P_RECT will usually be selected by the encoder if blocks that are smaller than 16 by 16 pixels can be encoded more efficiently than the entire macroblock. That usually means that these regions are very structured and/or have been slightly changed compared to previous frames. Hence, it is assumed that likely a moving object is present here.

Macroblocks that are not further divided (i.e., of coding mode MB_P_16x16) indicate high uncertainty concerning moving objects. On the one hand it is conceivable that slowly moving objects with constant directions are present in these regions, but on the other side the corresponding motion vector could be quite short and this type has been selected because of a slightly noisy source. Therefore, the assumption here is that there is maybe motion.

The last coding mode MB_P_SKIP is selected by the encoder if the predicted motion vector points to an area within the previous frame that is quite similar to the current macroblock.

That means that it is most likely that there is no motion since there is nearly no difference between the current and the previous frame within this region.

An object value OV, representing a relevance of the respective block BL to be part of an object OBJ in the image IMG, is formed by analyzing the indicator map (IM) in an area of the respective block (BL). The object value may be a value that is assigned to the indicator of the respective block. In an alternative solution, since objects usually extent over several macroblocks, the object value can be generated by a moving object certainty (MOC) of a macroblock decoded depends on its neighboring macroblocks.

In a second example of the invention, which can be executed in combination with the first example or as standalone, the assignment of coding indicators based on transform coefficients TC of a block BL of an image IMG to the indicators I1, I2, I3 is explained. In figure 2 pixels in an uncoded representation of a specific block BL are shown. In one of the coding steps of the encoder pixels, either an image signal of an image blocks or a diffential image signal representing a difference of two image blocks, are coded as transform coefficients TC.

In a first solution of the second example a first coding identifiers CIND1 is formed by a length LA of coded coefficients of a block of the image after quantization and entropy coding, e.g. by a Huffman coding scheme, of the corresponding transform coefficients are analyzed. The length LA may represent a number of bits to represent the coded coefficients of a specific block. The lower the length is the less image activity is expected and vice versa. Hence specific value ranges of the length are assigned to a respective indicator, e.g.

| Indicator | Image activity | value range of the length LA |
|---|---|---|
| I1 | low | 0 - 63 |
| I2 | low-medium | 64-127 |
| I3 | medium - high | 128-191 |
| I4 | high | 192-255 |

In a second solution of the second example a second coding identifiers CIND2 is formed by a number LB of transform coefficients of a block unequal to zero are counted. The more coefficients are unequal zero the more image activity is expected in the analyzed block. For a block of 4x4 transform coefficients the indicators may be set e.g. as

| Indicator | Image activity | value range of the length LB |
|---|---|---|
| I1 | low | 0 - 2 |
| I2 | low-medium | 3-4 |

(continued)

| Indicator | Image activity | value range of the length LB |
|---|---|---|
| I3 | medium | 5-8 |
| I4 | medium-high | 9-10 |
| I5 | high | 11-15 |

In a third solution of the second example a third coding identifiers CIND3 is formed by a sum value LC that sums all absolute amplitudes of the transform coefficients per a specific block can be taken into account to estimate the image activity in the specific block. For this solution the indicators may be set in an analog way as for the first solution whereby a higher sum value shows a higher image activity than a lower sum value.

In a fourth solution of the second example a fourth coding identifiers CIND4 is formed by an energy value LD estimation in the analyzed block, such as

$$LD = \sum_{i=1}^{N} TC(i)^2 ,$$

with N transform coefficients TC(i) at position i. The higher the energy value the more image activity is expected in the analyzed block. In an analog way to the previous solutions the energy value can be segmented in value ranges that are assigned to indicators preselecting a respective image activity.

In a fifth solution of the second example a fith coding identifiers CIND5 is formed by second energy value LE estimation in the analyzed block, such as

$$LE = \sum_{i=1}^{N} Q(TC(i))^2 ,$$

with N transform coefficients TC(i) at position i, whereby not the transform coefficients TC itself but the transform coefficient level Q(TC(i)) is used. A transform coefficient level represents a respective transform coefficient after quantization. The higher the second energy value LF the more image activity is expected in the analyzed block. In an analog way to the previous solutions the second energy value can be segmented in value ranges that are assigned to indicators preselecting a respective image activity.

The respective value or value ranges in example two can be adapted to reflect an analyzed block size. This gives the opportunity to have categories that work for different block sizes. Hence the setting of the ranges corresponding to specific indicators can be adapted to the respective block size. In an optional enhancement the values that are assigned to the respective indicators can be normalized, e.g. such that the minimum value is zero and the maximum value is 1. This would change the relation between the coding indicator and indicators e.g. for solution 1 for a 8x8 block such as

| Indicator | Image activity | value range of the length LA |
|---|---|---|
| I1 | low | 0/256 - 63/256 |
| I2 | low-medium | 64/256 -127/256 |
| I3 | medium - high | 128/256 - 191/256 |
| I4 | high | 192/256 - 255/256 |

and e.g. for solution 1 for a 4x4 block such as

| Indicator | Image activity | value range of the length LA |
|---|---|---|
| I1 | low | 0/16 - 3/16 |
| I2 | low-medium | 4/16 -7/16 |
| I3 | medium - high | 8/16 - 11/16 |
| I4 | high | 12/16 - 15/16 |

In these two assignment lists the value ranges were normalized from 0 to 1 (1 is not included) based on the block size with 256 and 16 coefficients.

In an optional enhancement of the first and second example two or more coding indicators or the coding mode and at least one coding indicator can be used to form a specific indicator. This can be achieved for example by normalizing the values assigned to each indicator from 0 to 1. Then in a next step the normalized values or specifically assigned values of the indicators can be combined, e.g. by multiplication to generate a new value that relates to a specific indicator. The following example shows this.

For the coding modes the following assignments to indicators Ia1, ..., Ia4 are given:

| Slice Type | Coding Mode CMOD | Assumption | Indicator |
|---|---|---|---|
| P | MB_I_4x4 | most likely motion | Ia4 = 3/3 |
| P | MB_I_16x16 | most likely motion | Ia4 = 3/3 |
| P | MB_P_8x8 | likely motion | Ia3 = 2/3 |
| P | MB_P_RECT | likely motion | Ia3 = 2/3 |
| P | MB_P_16x16 | motion | Ia2 = 1/3 |
| P | MB_P_SKIP | most likely no motion | Ia1 = 0/3 |

The indicators Ia1,...Ia4 show assigned values from 0 to 1.

For the coding indicator La the following assignments to the indicators Ib1, ..., Ib4 are given:

| Indicator | Image activity | value range of the length LA |
|---|---|---|
| Ib1 | low | 0/256 - 63/256 |
| Ib2 | low-medium | 64/256 -127/256 |
| Ib3 | medium - high | 128/256 - 191/256 |
| Ib4 | high | 192/256 - 255/256 |

For a 8x8 block the following indicators result from a first analysis of the coding mode and a second analysis of the coding indicator: Ia4 = 1, Ib2=LA=80/256

The indicator I1, ..., 14 that represents a combination of the two indicators Ia und Ib shows the following assignment:

| Indicator | Image activity | value range of the length LA |
|---|---|---|
| I1 | low | $0 \leq I1 < 1/4$ |
| I2 | low-medium | $1/4 \leq I2 < 1/2$ |
| I3 | medium - high | $1/2 \leq I3 < 3/4$ |
| I4 | high | $3/4 \leq I4 \leq 1$ |

The combination is formed by a weighted sum of OV = 0,5*Ia + 0,5*Ib = 21/32. This is in the range of I3. Hence the chosen indicator is 13.

The combination of the coding mode with at least one of the coding indicators or of at least two coding indicators can be executed in different ways too.

To be able to assign macroblocks to the previously defined coding modes, the macroblock types have to be extracted from the bit stream. The same applies to assign coding indicators. As already mentioned, H.264/AVC is a block-based video compression standard and has a hierarchical structure consisting of five levels. Figure 1 illustrates this hierarchy.

The highest hierarchical level is a coded picture. Since the Baseline profile of H.264/AVC does not support interlaced coding, a coded picture within this profile is always an entire frame. On the next level a frame consists of at least one slice. If flexible macroblock ordering (FMO) is not used, which is assumed since FMO is rarely used in practice, a slice SLC, see Fig. 2, consists of several consecutive macroblocks MBL, BL on the third level. Each macroblock can be further divided in smaller blocks, at which the smallest available block has a size of 4 by 4 pixels FIX.

H.264/AVC defines a huge number of syntax elements. The most important for the presented algorithm will be discussed in the following. The nal_unit_type in the network abstraction layer (NAL) unit header indicates if the contained coded slice belongs to an instantaneous decoding refresh (IDR) or non-IDR frame. IDR frames can only consist of I slices while non-IDR frames are composed of slices of any type. The actual type of each slice is then encoded within its header by the syntax element slice_type. The beginning of the slices within the current frame is encoded by the element first mb_in_slice, which can also be extracted from the slice headers. On macroblock level two elements are extracted. As already mentioned, no further information is transmitted if a macroblock is encoded with P_SKIP type. In this case, the bit stream contains an element called mb_skip_run that indicates the number of consecutive macroblocks in skip mode. For all macroblocks in non-skip mode the algorithm extracts the available syntax element mb_type.

The H.264/AVC syntax elements are extracted from the bit stream and decoded, if required. The NAL unit type is directly accessible without decoding. To access the other syntax elements the bit stream has to be parsed, i.e., entropy decoded. Already during the parsing process each macroblock is assigned to one of the six coding modes and the corresponding indicator is set, see third step S3 of figure 1.

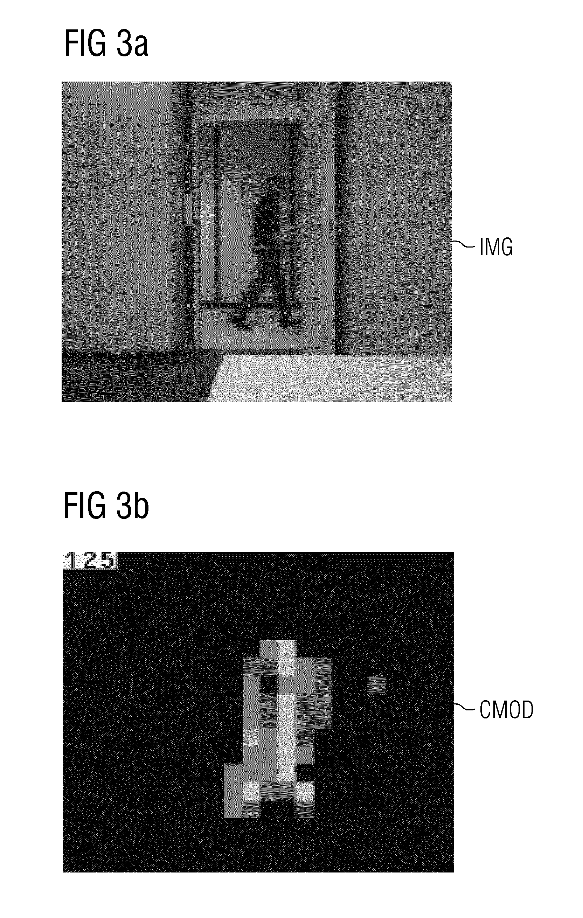

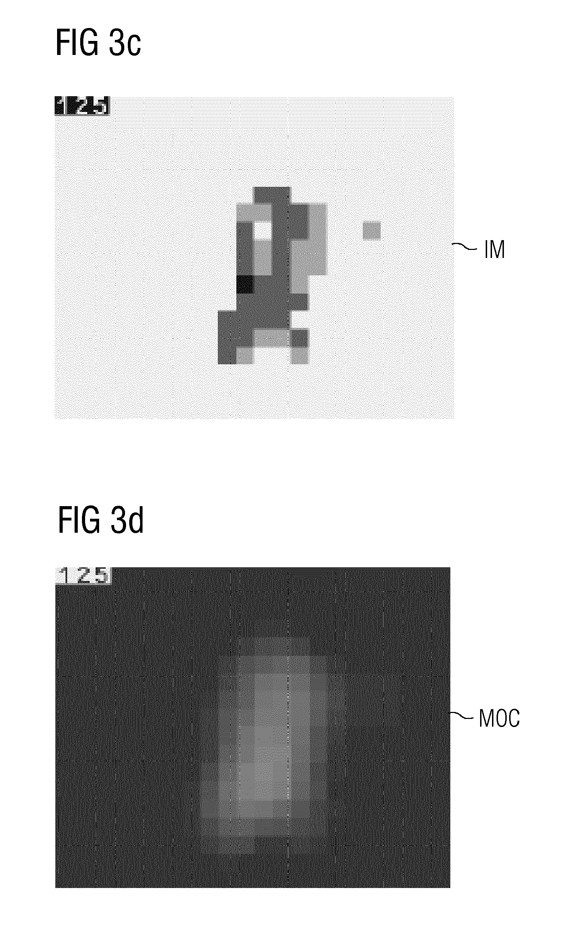

The figures 3a-3h show different images and maps of an example using the previous description. Figure 3a shows a frame /image of an image sequence with a moving person in the middle of the image. Figure 3b gives an overview of coding modes per block in the image used in the coded representation of the image of figure 3a. Figure 3c shows the indicators assigned to blocks of the image, also called indicator map IM. The different grey colored blocks in figures 3b and 3c show different coding modes and identifiers respectively. Black colored blocks in these figures show blocks that are not assigned to any coding modes and identifiers respectively.

In a fourth steps S4 an object value OV for each block of the image is generated based on the indicator of the block and the indicator of blocks in the neighborhood of the block. The MOC c[x; y] of a single macroblock m[x, y] (with Cartesian coordinates [x; y]) that depends on the indicators $w_t[x, y]$ of all macroblocks in a designated neighboring area (translation indicated by (I, j)) is defined as

$$c[x,y] = \sum_{j=-2}^{2} \sum_{i=-2}^{2} w^{ij}[x,y]$$

where

$$w^{ij}[x, y] = \begin{cases} w_t[x + i, y + j] & , \quad \forall i, j \in \{-1,0,1\} \\ \left(w_t[x + i, y + j] - 1\right)^+ & , \quad \forall (i, j) \in \{(-2,0) \\ & \qquad (0,-2), (0,2), (2,0)\} \\ \left(w_t[x + i, y + j] - 2\right)^+ & , \quad otherwise \end{cases}$$

Thereby, the operator $(\cdot)^+$ is defined as

$$^+ : Z \rightarrow N_0, a \rightarrow (a)^+ := \max(0, a)$$

According to (1) the MOC of a macroblock depends on the indicators of its eight direct neighbors and on the indicators of the 16 neighbors of their direct neighbors. Thereby, the values of the indicators are weighted according to their distance to the current macroblock. Direct neighbors are weighted just like the macroblock itself. Neighbors in higher distance factor into the MOC with decreased weight, since it is assumed that the mutual interdependence with respect to the presence of an object is also lower.

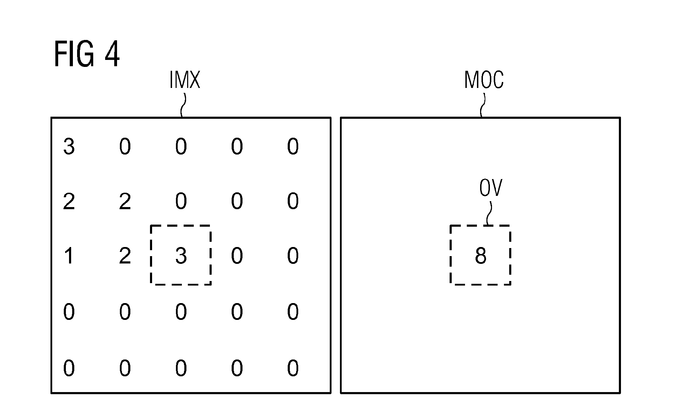

A more illustrative description of step four S4 is depicted in Figure 4. Figure 4 shows on the left side specific values assigned to the respective indicators I1, ..., I4, as shown in the example 1. In the right side the object value OV after performing step 4 is shown. At each macroblock position a discrete kernel is set according to the macroblock's indicator. In case the value of the indicator equals 0 all points of the kernel are also 0, i.e., the indicator of this macroblock does not affect any other macroblock.

Once the kernels of the relevant neighboring macroblocks are set, as shown in a 2-dimensional representation in Figure 4b, the MOC of the current macroblock is calculated by summarizing all overlapping kernel values at its position. In the example in Figure 4a this equals 8. Hence an object value OV = 8.

Note that if the current macroblock lies near the frame border, some of its neighbors will not exist. In this case the indicator map is extended to the required size and the indicators of the new border macroblocks are set to 0.

In a fifth step S5 the object map OM is generated that shows which blocks are part of the object and which blocks are not part of the object. The term object in this example is equivalent to foreground and the term not part of the object relates to background. Hence in this step the current image is segmented to fore- and background. Thereto, the calculated MOC map is thresholded by t = 6. Whether a macroblock m[x, y] is part of the foreground is calculated by

$$m[x,y] = \left\{ \begin{array}{lll} 1 & , & c[x,y] \geq t \\ 0 & , & \text{otherwise} \end{array} \right. , \qquad (2)$$

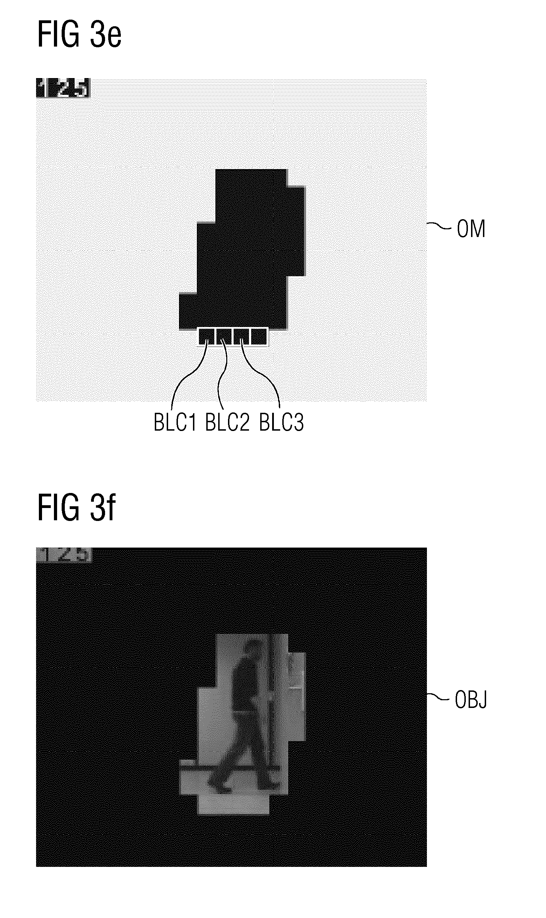

where 1 indicated the foreground and 0 indicates the background. Figure 3d show the MOC for each block of the image and figure 3e the binary mask for the object map OM. In figure 3e the object is marked by white blocks and the background by black blocks. Figure 3f shows the extracted object OBJ based on figure 3a and the object map.

The resulting object map of the segmentation process can further be refined. First of all, connected foreground macroblocks are clustered to individual objects. Since each single macroblock, not only macroblocks whose types indicate moving regions, is evaluated during the previous step, holes within the unrefined binary masks should be quite rare. Hence, simply clustering connected macroblocks will give a good guess of actual objects.

An optional step can be applied if the searched object should be restricted to a class of objects, e.g., persons. In this case, too small, narrow, or flat objects can be discarded. Furthermore, it is also most likely that persons are not much broader than tall. Such objects can also be discarded, which may for example be helpful to eliminate false detections caused by shadows. The method finalizes in step END.

The method steps described so far can be implemented as a software program that can be stored on a memory device and/or executed by a processor PROZ. The processor may be connected to a memory for e.g. for storage of the steps as a program and for executing by the processor, and to input/output device for reading the image and delivering intermediate results of the method and/or the object map OM.

The invention can be implemented by a device DEV for object detection in an image IMG of a coded video data, see FIG. 1, with:

- a first unit M1 for providing at least three indicators I1, I2, I2, each indicator represents a different image activity from low to high image activity for a respective block BL in the image IMG;
- a second unit M2 for assigning a coding mode CMOD of the block BL based on a block coding type to one of the at least three indicators I1, I2, 13 or assigning at least one coding indicator CIND of the block B based on transform coefficients TC of the block BL to one of the at least three indicators I1, I2, I3, the assignment is performed such that the coding mode CMOD and/or the coding identifier CIND that are likely to show a specific image activity are grouped to the respective indicator that represents the specific image activity;
- a third unit M3 for forming an indicator map IM by assigning one of the at least three indicators to blocks BL of the image IMG depending on the coding mode CMOD or on the at least one coding indicator CIND of the respective block BL;
- a fourth unit M4 for forming an object value OV for the respective block BL by analyzing the indicator map IM in an area of the respective block BL, the object value OV showing a relevance of the respective block BL to be part of an object OBJ in the image IMG;
- a fifth unit M5 for assigning the respective block BL to an object map OM, if the object value OV shows a certain characteristic TH, the object map OM showing blocks BL1, BL2, BL3 that relate to the object in the image IMG.

The device may also cover a sixth unit M6 for performing additional steps disclosed before.

The device may also contain a processor connected to a memory unit for e.g. for storage of the at least some of the disclosed steps as a program and for executing by the processor, and to input/output device for reading the image and delivering intermediate results of the method and/or the object map OM.

References

[1] M. Laumer, P. Amon, A. Hutter, and A. Kaup, "A Compressed Domain Change Detection Algorithm for RTP Streams in Video Surveillance Applications," in Proc. IEEE 13th Int. Workshop on Multimedia Signal Processing (MMSP), 2011, pp. 1-6.

[2] K. Szczerba, S. Forchhammer, J. Stottrup-Andersen, and P. T. Eybye, "Fast Compressed Domain Motion Detection in H.264 Video Streams for Video Surveillance Applications," in Proc. Sixth IEEE Int. Conf. on Advanced Video and Signal Based Surveillance (AVSS), 2009, pp. 478-483.

[3] T. Yokoyama, T. Iwasaki, and T. Watanabe, "Motion Vector Based Moving Object Detection and Tracking in the MPEG Compressed Domain," in Proc. Seventh Int. Workshop on Content-Based Multimedia Indexing (CBMI), 2009, pp. 201 - 206.

[4] R. Wang, H.-J. Zhang, and Y.-Q. Zhang, "A Confidence Measure Based Moving Object Extraction System Built for Compressed Domain," in Proc. IEEE Int. Symp. on Circuits and Systems (ISCAS), 2000, vol. 5, pp. 21-24.

[5] W. Fei and S. Zhu, "Mean Shift Clustering-based Moving Object Segmentation in the H.264 Compressed Domain," IET Image Processing, vol. 4, no. 1, pp. 11 -18, 2010.

[6] Z. Qiya and L. Zhicheng, "Moving Object Detection Algorithm for H.264/AVC Compressed Video Stream," in Proc. Int. Colloquium on Computing, Communication, Control, and Management (CCCM), 2009, vol. 1, pp. 186 -189.

[7] C.-M. Mak and W.-K. Cham, "Real-time Video Object Segmentation in H.264 Compressed Domain," IET Image Processing, vol. 3, no. 5, pp. 272 -285, 2009.

[8] F. Porikli, F. Bashir, and Huifang Sun, "Compressed Domain Video Object Segmentation," IEEE Transactions on Circuits and Systems for Video Technology, vol. 20, no. 1, pp. 2 -14, 2010.

[9] D. Comaniciu and P. Meer, "Mean Shift: A Robust Approach Toward Feature Space Analysis," IEEE Transactions on Pattern Analysis and Machine Intelligence, vol. 24, no. 5, pp. 603 -619, 2002.

[10] S. Verstockt, S. De Bruyne, C. Poppe, P. Lambert, and R. Van de Walle, "Multi-view Object Localization in H. 264/AVC Compressed Domain," in Proc. Sixth IEEE Int. Conf. on Advanced Video and Signal Based Surveillance (AVSS), 2009, pp. 370-374.

[11] J. Berclaz, F. Fleuret, E. Turetken, and P. Fua, "Multiple Object Tracking Using K-Shortest Paths Optimization," IEEE Transactions on Pattern Analysis and Machine Intelligence, vol. 33, no. 9, pp. 1806 -1819, 2011.

## Claims

1. Method for object detection in an image (IMG) of a coded video data, comprising:

   - Providing at least three indicators (I1, 12, 12), each indicator represents a different image activity from low to high image activity for a respective block (BL) in the image (IMG);
   - Assigning a coding mode (CMOD) of the block (BL) based on a block coding type to one of the at least three indicators (I1, 12, 13) or assigning at least one coding indicator (CIND) of the block (BL) based on transform coefficients (TC) of the block (BL) to one of the at least three indicators (I1, I2, 13), the assignment is performed such that the coding mode (CMOD) and/or the coding identifier (CIND) that are likely to show a specific image activity are grouped to the respective indicator that represents the specific image activity;
   - Forming an indicator map (IM) by assigning one of the at least three indicators to blocks (BL) of the image (IMG) depending on the coding mode (CMOD) or on the at least one coding indicator (CIND) of the respective block (BL);
   - Forming an object value (OV) for the respective block (BL) by analyzing the indicator map (IM) in an area of the respective block (BL), the object value (OV) showing a relevance of the respective block (BL) to be part of an object (OBJ) in the image (IMG);
   - Assigning the respective block (BL) to an object map (OM), if the object value (OV) shows a certain characteristic (TH), the object map (OM) showing blocks (BL1, BL2, BL3) that relate to the object in the image (IMG).

2. Method according to claim 1,
   the step of assigning a coding mode further comprises:

   Assigning intra-coded block types as coding modes (CMOD) to the indicator (13) that relates to high image activity.

3. Method according to claim 1 or 2,
the step of assigning a coding mode further comprises:

Assigning the block type such that the more pixels are represented by a block an indicator representing less image activity is assigned.

4. Method according to one of the previous claims,
the step of assigning a coding mode further comprises:

Assigning to a block type that shows no additional data for a block to be coded the indicator (I1) representing low image activity.

5. Method according to one of the previous claims,
the step of forming an indicator map further comprises:

Assigning the indicators (I1, I2, 13) for coding modes (CMOD) to blocks (BL) only that are part of an inter-coded image (IMG) or inter-coded slice (SLC).

6. Method according to one of the previous claims,
The step of assigning at least one coding indicator further comprises:

- Segmenting result value to value ranges and assigning the value ranges according to their respective expected image activity to a respective indicator that represents an equivalent image activity, whereby the result value is formed on the basis of one of the following procedures:
- Assigning a number of bits, used to code the transform coefficients of the block after quantization and entropy coding as the result value;
- Assigning a number of transform coefficients of a block that is unequal zero as the result value;
- Assigning a sum of absolute amplitudes of transform coefficients unequal to zero as the result value;
- Assigning an energy value representing the energy of the transform coefficients of the block as the result value;
- Assigning an energy value representing the energy of the transform coefficient levels of the block as the result value.

7. Method according to one of the previous claims,
the step of assigning at least one coding indicator further comprises:

Combining a first indicator (Ia) with a second indicator (Ib) to form the indicator (I1, ..., I3), whereby the first and second indicators (Ia, Ib) are based on either the coding mode and one of the coding indicators or two coding indicators.

8. Method according to claim 7,
the step of assigning at least one coding indicator further comprises:

Normalising values representing the first and second indicators (Ia, Ib);
Forming the indicator (I1, I2, I3) by multiplying the normalized values for the first and second indicators (Ia, Ib).

9. Method according to one of the previous claims,
The step of forming an object value (OV) further comprises:

Analyzing the area such that this includes the indicator (I1) of the respective block (BL) and the indicators (I1, I2, I3) in a neighborhood (NH) of the respective block (BL).

10. Device for object detection in an image (IMG) of a coded video data, comprising:

- a first unit (M1) for providing at least three indicators (I1, I2, I2), each indicator represents a different image activity from low to high image activity for a respective block (BL) in the image (IMG);
- a second unit (M2) for assigning a coding mode (CMOD) of the block (BL) based on a block coding type to one of the at least three indicators (I1, I2, I3) or assigning at least one coding indicator (CIND) of the block (BL) based on transform coefficients (TC) of the block (BL) to one of the at least three indicators (I1, I2, I3), the assignment is performed such that the coding mode (CMOD) and/or the coding identifier (CIND) that are likely to show a specific image activity are grouped to the respective indicator that represents the specific image activity;
- a third unit (M3) for forming an indicator map (IM) by assigning one of the at least three indicators to blocks (BL) of the image (IMG) depending on the coding mode (CMOD) or on the at least one coding indicator (CIND) of the respective block (BL);
- a fourth unit (M4) for forming an object value (OV) for the respective block (BL) by analyzing the indicator map (IM) in an area of the respective block (BL), the object value (OV) showing a relevance of the respective block (BL) to be part of an object (OBJ) in the image (IMG);
- a fifth unit (M5) for assigning the respective block (BL) to an object map (OM), if the object value (OV) shows a certain characteristic (TH), the object map (OM) showing blocks (BL1, BL2, BL3) that relate to the object in the image (IMG).

11. Device according to claim 10,
Further comprises:

a sixth unit (M6) for performing at least one of the steps disclosed by the claims 2 to 9.

## FIG 1

# FIG 2

# FIG 3a

IMG

# FIG 3b

CMOD

## FIG 3c

~ IM

## FIG 3d

~ MOC

# FIG 3e

OM

BLC1 BLC2 BLC3

# FIG 3f

OBJ

# FIG 4

IMX

| 3 | 0 | 0 | 0 | 0 |
|---|---|---|---|---|
| 2 | 2 | 0 | 0 | 0 |
| 1 | 2 | 3 | 0 | 0 |
| 0 | 0 | 0 | 0 | 0 |
| 0 | 0 | 0 | 0 | 0 |

MOC

OV

8

Europäisches
Patentamt

European
Patent Office

Office européen
des brevets

**EUROPEAN SEARCH REPORT**

Application Number

EP 12 16 6009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/118862 A1 (SUGIMOTO KAZUO [JP] ET AL) 29 August 2002 (2002-08-29) | 1,2,5-11 | INV. H04N7/26 H04N7/50 G06T7/20 |
| Y | * paragraphs [0046] - [0051] * ----- | 3,4 | |
| Y | US 2011/228092 A1 (PARK GWANG HOON [KR]) 22 September 2011 (2011-09-22) * paragraph [0028] * * figures 8, 9 * ----- | 3,4 | |

TECHNICAL FIELDS
SEARCHED        (IPC)

H04N
G06T
G08B

The present search report has been drawn up for all claims

| Place of search | Date of completion of the search | Examiner |
|---|---|---|
| Munich | 11 September 2012 | Di Cagno, Gianluca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 16 6009

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2012

| Patent document cited in search report | | Publication date | Patent family member(s) | | | Publication date |
|---|---|---|---|---|---|---|
| US 2002118862 | A1 | 29-08-2002 | GB | 2374751 | A | 23-10-2002 |
| | | | HK | 1049759 | A1 | 05-03-2004 |
| | | | JP | 4140202 | B2 | 27-08-2008 |
| | | | JP | 2002262296 | A | 13-09-2002 |
| | | | US | 2002118862 | A1 | 29-08-2002 |
| US 2011228092 | A1 | 22-09-2011 | US | 2011228092 | A1 | 22-09-2011 |
| | | | WO | 2011115356 | A1 | 22-09-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. LAUMER ; P. AMON ; A. HUTTER ; A. KAUP.** A Compressed Domain Change Detection Algorithm for RTP Streams in Video Surveillance Applications. *Proc. IEEE 13th Int. Workshop on Multimedia Signal Processing (MMSP,* 2011, 1-6
- **K. SZCZERBA ; S. FORCHHAMMER ; J. STOTTRUP-ANDERSEN ; P. T. EYBYE.** Fast Compressed Domain Motion Detection in H.264 Video Streams for Video Surveillance Applications. *Proc. Sixth IEEE Int. Conf. on Advanced Video and Signal Based Surveillance (AVSS,* 2009, 478-483
- **T. YOKOYAMA ; T. IWASAKI ; T. WATANABE.** Motion Vector Based Moving Object Detection and Tracking in the MPEG Compressed Domain. *Proc. Seventh Int. Workshop on Content-Based Multimedia Indexing (CBMI,* 2009, 201-206
- **R. WANG ; H.-J. ZHANG ; Y.-Q. ZHANG.** A Confidence Measure Based Moving Object Extraction System Built for Compressed Domain. *Proc. IEEE Int. Symp. on Circuits and Systems (ISCAS,* 2000, vol. 5, 21-24
- **W. FEI ; S. ZHU.** Mean Shift Clustering-based Moving Object Segmentation in the H.264 Compressed Domain. *IET Image Processing,* 2010, vol. 4 (1), 11-18
- **Z. QIYA ; L. ZHICHENG.** Moving Object Detection Algorithm for H.264/AVC Compressed Video Stream. *Proc. Int. Colloquium on Computing, Communication, Control, and Management (CCCM,* 2009, vol. 1, 186-189
- **C.-M. MAK ; W.-K. CHAM.** Real-time Video Object Segmentation in H.264 Compressed Domain. *IET Image Processing,* 2009, vol. 3 (5), 272-285
- **F. PORIKLI ; F. BASHIR ; HUIFANG SUN.** Compressed Domain Video Object Segmentation. *IEEE Transactions on Circuits and Systems for Video Technology,* 2010, vol. 20 (1), 2-14
- **D. COMANICIU ; P. MEER.** Mean Shift: A Robust Approach Toward Feature Space Analysis. *IEEE Transactions on Pattern Analysis and Machine Intelligence,* 2002, vol. 24 (5), 603-619
- **S. VERSTOCKT ; S. DE BRUYNE ; C. POPPE ; P. LAMBERT ; R. VAN DE WALLE.** Multi-view Object Localization in H.264/AVC Compressed Domain. *Proc. Sixth IEEE Int. Conf. on Advanced Video and Signal Based Surveillance (AVSS,* 2009, 370-374
- **J. BERCLAZ ; F. FLEURET ; E. TURETKEN ; P. FUA.** Multiple Object Tracking Using K-Shortest Paths Optimization. *IEEE Transactions on Pattern Analysis and Machine Intelligence,* 2011, vol. 33 (9), 1806-1819